# EUROPEAN PATENT APPLICATION

(11) **EP 3 473 536 A1**
(43) Date of publication of application: **24.04.2019**
(21) Application number: 17197742.4
(22) Date of filing: 23.10.2017
(51) Int. Cl.: B63B 27/36, B63B 35/00

(54) **A SELF-PROPELLED OFFSHORE INSTALLATION VESSEL**

(71) Applicant: Logima ApS, -2660 Brøndby Strand (DK)
(72) Inventor: HANSEN, Peter, 2665 Vallensbæk Strand (DK); HANSEN, Svend Erik, 2660 Brøndby Strand (DK)
(74) Representative: AWA Denmark A/S

(57) **Abstract**

A self-propelled offshore installation vessel (1) operates at an offshore position and has at least one water pump (27) being operable to pump water from a water inlet opening (22) to a water outlet opening (25) via water conduit pipes (24). The water system can eject water out through the water outlet opening(s), whereby the ejected water interacts with the waves to dampen waves in an affected area (35) of the sea at the self-propelled offshore installation vessel (1).

## Description

The present invention relates in one aspect to a self-propelled offshore installation vessel having a hull with an outer side and with a water system, which water system comprises at least one water inlet opening in the hull associated with a controllable inlet valve, water conduit pipes, at least one water outlet opening in the outer side of the hull associated with a controllable outlet valve, and at least one water pump being operable to pump water from the water inlet opening and/or to pump water to the water outlet opening via the water conduit pipes.

Such a self-propelled offshore installation vessel is generally known in a configuration where the water system is a ballast water system.

An offshore installation vessel is used to perform operations at offshore sites, which are locations at open sea and typically far from land. One example of use is the construction of an offshore wind turbine farm where the self-propelled offshore installation vessel installs wind turbine foundations, towers, nacelles and wings to the wind turbine constructions erected from the sea bottom at the offshore farm. WO 2012/175091 discloses an example of an offshore installation vessel for such use. The disclosed offshore installation vessel receives installation parts transported to the offshore site on a barge, and the barge is loaded onto the offshore installation vessel at the offshore site.

The operation of the self-propelled offshore installation vessel at the offshore site is dependent on weather conditions, and primarily dependent on the sea state, as waves cause a floating vessel to perform movements. The above-mentioned example where a barge is to approach and be loaded onto the vessel illustrates the weather dependency, as the barge is floating when it approaches the vessel, and too large movements of the barge in relation to the vessel may impede operations. As another example the self-propelled offshore installation vessel may be a crane vessel where the parts to be lifted arrives on a supply vessel or a barge that is to be moored along and/or be jacked up at the side of the offshore installation vessel. Too high a sea state may also prevent the jacking-up or the mooring operation at the offshore installation vessel.

For reasons of operational efficiency, it is a desire to be able to continue the planned operations for as long as possible, even if the weather gets worse. Many of the offshore sites for wind turbines have been selected due to the presence of wind, and wind over extended sea areas creates waves.

An object of the present invention is to modify the self-propelled offshore installation vessel so that it may continue operations into sea states with higher waves.

In view of this the initially mentioned self-propelled offshore installation vessel is, according to the present invention, characterized in that the at least one water outlet opening is provided with a nozzle device and is located at the outer side of the hull at a position of less than 5 meters from the water line at a predetermined draught of the self-propelled offshore installation vessel.

In situations where the weather gets worse and the sea state increases at the offshore site where the offshore installation vessel is in operation, the at least one water pump can be set in operation to pump water to the at least one water outlet opening, so that water is ejected through the nozzle device and into the sea, whereby the ejected water interacts with the waves to dampen waves in an affected area of the sea at the self-propelled offshore installation vessel. The significant wave height of the area of the sea affected by the ejected water is thus lower than the general significant wave height at the offshore site, and this may allow the self-propelled offshore installation vessel to continue to operate in weather conditions, which would previously have caused abortion of operations. The self-propelled offshore installation vessel according to the present invention may thus be able to operate during more days of the year.

The water ejected to dampen waves may be supplied from tanks within the hull, provided that the water pump has pumped water from the water inlet opening to such tanks prior to the ejection of water. Alternatively, or additionally, the water ejected to dampen waves may be supplied directly from the at least one water inlet opening, so that sea water is pumped in from the sea by the at least one water pump and delivered to the at least one water outlet opening and ejected into the sea to dampen waves. In the latter manner of operation, the water ejection may continue for extended periods of time, such as days, because there are no restrictions due to tank capacity.

The location of the water outlet opening at a position of less than 5 meters from the water line at the predetermined draught aims at obtaining an effective wave dampening effect. It is presently believed that the water outlet opening is most effective when located below sea level within a depth range of twice the size of the wave height. However, it is also considered that a water outlet opening located above sea level can have effect on the waves, in that the ejected jet or jets of water will then hit into waves and cause them to diminish in size.

The nozzle device can direct the water in a certain direction and/or the nozzle device can have less cross-sectional area than the water conduit pipe connected to the water outlet opening so that the velocity of the water flow is increased in the nozzle.

In an embodiment the predetermined draught is a draught at which the self-propelled offshore installation vessel is intended to receive a supply vessel, such as a barge with parts to be installed at the offshore installation site. The supply vessel is typically large, and the offshore installation vessel is typically even larger, so an operation where these two floating vessels are approaching one another may in particular benefit from dampening of the waves of the sea area in between the vessels. The at least one water outlet opening may thus advantageously be located in the outer side of the hull in a position relating to the draught at which the supply vessel is received. Naturally, the at least one water outlet opening can be used also at other draughts, even though the wave dampening effect may then be somewhat less effective. As an alternative, the predetermined draught may be one at which the offshore installation vessel operates for extensive periods, such as the draught at which parts are physically installed at the offshore site.

In an embodiment, the at least one water outlet opening is a plurality of water outlet openings in the outer side of the hull. Although it is possible to utilize a single water outlet opening with a nozzle device, it is preferred to use a plurality of water outlet openings for increasing the dampening effect on the waves. The increased effect can cause further decrease of the significant wave height in the affected area of the sea, and/or extend the size of the affected area of the sea.

In a further development of the latter embodiment, at least some of the plurality of water outlet openings are arranged at different heights in the outer side of the hull. The wave dampening effect may depend on the vertical positioning of the water outlet openings. It is presently assumed that the dampening effect is largest if the water outlet opening is located at a distance below the waterline about corresponding to the wave height to be dampened. However, waves on the sea at a given sea state is composed of a plurality of individual waves having each their wave height. Any given sea state having waves, will thus have a mix of different wave heights, and this speaks for having a plurality of water outlet openings that are arranged at different heights. Preferably, the water outlet openings are arranged with at least one water outlet opening positioned below the water line corresponding to the predetermined draught of the self-propelled offshore installation vessel.

In a further development, several water outlet openings are positioned below said water line. An affected area of large size can be obtained by locating several water outlet openings with an individual spacing in the longitudinal direction of the hull, and some of these water outlet openings can be positioned below the water line. Alternatively, all water outlet openings are positioned above the water line at the predetermined draught, however it is presently preferred that one or more water outlet openings can be positioned below the water line.

In an embodiment, the hull has a stern end and a cargo main deck and a side section extending upwards at either longitudinal side of the cargo main deck, and the self-propelled offshore installation vessel has ballast tanks and a ballast pumping system for changing the vessel draught between the predetermined draught, at which the cargo main deck is submerged below sea level, and a second draught, at which the cargo main deck is above sea level. Such an offshore installation vessel may receive a barge with parts on the cargo main deck while ballasted to the draught with the cargo main deck submerged below sea level, and then the draught can be decreased by pumping out ballast water, so that the barge lands on the cargo main deck and is lifted out of the water as the cargo main deck is elevated to be above the water line. The ejection of water out of the water outlet opening(s) can be initiated before the barge reaches the offshore installation vessel. An affected sea area with dampened sea state can be produced in the sea next to the cargo main deck by the ejected water, and the barge can enter this affected area and remain there for a while, as the excessive barge movements diminish to an acceptable level, and then the barge can be floated in above the cargo main deck.

In an embodiment, the at least one water pump is comprised by one or more ballast pumps of the self-propelled offshore installation vessel. It is possible to equip the self-propelled offshore installation vessel with at least one water pump, which is separate from the ballast pumps of the vessel. This may be suitable e.g. in case the least one water pump has larger pumping capacity than the ballast pumps, or in cases requiring parallel operation of the at least one water pump and the ballast pumps. In other cases, it may be suitable to utilize one or more ballast pumps as said at least one water pump and thus save installation space and installation costs.

In an embodiment, the at least one water pump has a total water pumping capacity of at least 9000 m³/h. Although a lower total pumping capacity may also be applicable, such as capacity of at least 1500 m³/h, the larger capacity of at least 9000 m³/h is preferred in order to affect the waves more.

In an embodiment, the at least one water pump is configured as from 2 to 12 water pumps, each having a water pumping capacity in the range of 1000 m³/h to 5000 m³/h. Naturally, there can additionally or alternatively be a smaller water pump or a larger water pump than in the just specified configuration, however that configuration is presently considered to be able to affect waves in a general sea state having a significant wave height of 3 metres and create an affected sea area with dampened waves, in which the significant wave height is 2 metres or less. In an embodiment, the self-propelled offshore installation vessel comprises two jack-up legs at a starboard side and two jack-up legs at a port side, one of said two jack-up legs being a forward jack-up leg and the other being an aft jack-up leg, and the least one water outlet opening is configured as a plurality of water outlet openings which are arranged either at the aft jack-up leg on the starboard side and on the port side, or aft of the aft jack-up leg on the starboard side and on the port side, such as at the starboard side and the port side of the stern of the hull. With such an arrangement of water outlet openings on both the starboard side and the port side in the aft end of the installation vessel, this self-propelled offshore installation vessel is suitable for producing an affected sea area with dampened waves aft of the vessel in the whole breadth of the vessel. This is particularly advantageous when the installation vessel is turned facing into the wind and the incoming waves. With such a positioning the offshore installation vessel is itself as calm in movements as possible in the given sea state, and the hull of the offshore installation vessel will present a barrier for waves and create a kind of shadow area aft of the hull, with the effect that the affected sea area with dampened waves will lie protected behind the hull, and thus the affected area has the possibility to propagate a considerable distance aft of the hull. It is furthermore possible to reduce movements of the self-propelled offshore installation vessel by having one or more jack-up legs contact the sea bottom and thus remove movements of the installation vessel.

In an embodiment, the nozzle device has a cross-sectional area which is smaller than the cross-sectional area of the water conduit pipe connected to the water outlet opening. The reduced size of the outlet opening causes the water to have higher velocity at ejection from the outlet opening. The higher velocity causes a higher penetration distance of the ejected water into the sea adjacent to the hull. This embodiment is of advantage when the water pumps deliver water at low pressure, such as a pressure above atmospheric pressure in the range of 0.5 to 3 bar. However, it is also possible that the nozzle device has a cross-sectional area which is the same as, or larger than, the cross-sectional area of the water conduit pipe, in which case the water pump may be designed to deliver the water at a higher pressure than 3 bar, a pressure sufficient for the water to be ejected from the water outlet opening having the latter shape.

In an embodiment, the nozzle device directs the water in a direction different from the direction normal to the outer side of the hull. As an example, the nozzle can direct the ejected water in a direction pointing more to the aft of the hull, such as a direction forming an angle in the horizontal in the range of 10° to 70° with the side of the hull. As another example, the nozzle can direct the ejected water in a direction pointing more downwards, such as a direction forming an angle in the vertical in the range of 20° to 80° with the side of the hull. Naturally, the nozzle may also be arranged to direct the ejected water in an oblique direction forming an angle different from 90° in both the vertical direction and in the horizontal direction with respect to the side of the hull.

In an embodiment, the controllable outlet valve is a spade valve. The spade valve is suitable for water outlet openings of large size, such as an opening diameter in the range of 0.5 metres to 0.9 metres. As an alternative, the controllable outlet valve may be a slide valve or a butterfly valve.

According to another aspect, the present invention relates to a method of operating a self-propelled offshore installation vessel at an offshore position having a sea state with waves, which self-propelled offshore installation vessel has a hull with an outer side and with a water system, which water system comprises at least one water inlet opening in the hull associated with a controllable inlet valve, water conduit pipes, at least one water outlet opening in the outer side of the hull associated with a controllable outlet valve, and at least one water pump being operable to pump water from the water inlet opening and/or to pump water to the water outlet opening via the water conduit pipes.

For reasons of operational efficiency, it is a desire to be able to continue planned operations of the installation vessel for as long as possible, even if the weather gets worse.

With a view to this, the method according to the present invention is characterized in that the water system is activated to eject water out through the at least one water outlet opening, which has a nozzle device, whereby the ejected water interacts with the waves to dampen waves in an affected area of the sea at the self-propelled offshore installation vessel. When the general sea state at the offshore site is getting higher and approaches the limit for normal operation of the self-propelled offshore installation vessel, then instead of aborting operations, the water system is activated and utilized to dampen waves in an affected area of the sea so that the operations may continue to be performed in the affected area.

Preferably, the offshore wind farm installation vessel is positioned with its bow facing in direction of the incoming waves, said affected area of the sea being located at least aft of the stern of the hull. With such a positioning the hull of the offshore installation vessel will present a barrier for waves and create a kind of shadow area aft of the hull, with the effect that the affected sea area with dampened waves will lie protected behind the hull, and thus the affected area has the possibility to propagate a considerable distance aft of the hull.

Preferably, the water system ejects water simultaneously out through water openings on both the starboard side and the port side of the hull, e.g. so that about the same flow of water is ejected to the starboard side as to the port side, thus providing a symmetric affected area and maintaining equal action on the hull in the transverse direction.

In the following, illustrative schematic embodiments and schematic examples according to the present invention are described in further detail with reference to the highly schematic drawings, on which
Figs. 1 to 3 illustrate in views from above loading of a barge with wind turbine foundations onto a cargo main deck of a self-propelled offshore installation vessel,
Fig. 4 depicts in a view from above an embodiment of a self-propelled offshore installation vessel according to the present invention,
Fig. 5 illustrates in a view from above a horizontal section through the vessel of Fig. 1 at a level just below the upper structure of the cargo main deck,
Fig. 6 illustrates the vessel of Fig. 1 in a view from the aft forwards,
Fig. 7 illustrates a cross-section through the cargo main deck of the vessel of Fig. 1 ,
Fig. 8 illustrates a water system in another embodiment of a self-propelled offshore installation vessel according to the present invention,
Fig. 9 illustrates the starboard aft end portion of the vessel of Fig. 1, in a side view,
Fig. 10 illustrates a water system in yet another embodiment of a self-propelled offshore installation vessel according to the present invention,
Fig. 11 illustrates four water outlet openings in the side of the hull of a self-propelled offshore installation vessel according to the present invention, and
Fig. 12 illustrates in a view from above the vessel of Fig. 1 with activated water system for receiving a barge with parts.

The weather plays a role for the possibilities of performing offshore installation operations, such as installing offshore wind turbine farms, or performing maintenance on such farms. It is a well-known experience that installation work must be suspended when the weather is too rough.

For the four locations Table 1 lists the probability of exceedance (in percent) of significant wave heights given in metres. The percentages given are based on yearly average data. From the Percentage Exceedence Distribution in Table 1 it appears that a significant wave height of 2.0 metres is exceeded during 25% of the year at location A, while a significant wave height of 3.0 metres is exceeded only during about 9% of the year.

The below Table 1 exemplifies statistically the weather conditions expressed as Significant Wave Height, SWH, at the following four offshore locations:
A: 52.503°N, 5.524°W Irish Sea
B: 49.773°N, 4.657°W English Channel
C: 55.565°N, 2.250°E North Sea
D: 57.579°N, 8.209°W Hebrides Shelf

**Table 1**

| SWH in m | % at A | % at B | % at C | % at D |
|---|---|---|---|---|
| 0.5 | 89 | 99 | 96 | 100 |
| 1.0 | 61 | 80 | 75 | 96 |
| 1.5 | 41 | 57 | 52 | 82 |
| 2.0 | 25 | 38 | 35 | 66 |
| 2.5 | 15 | 25 | 23 | 52 |
| 3.0 | 9 | 17 | 15 | 40 |
| 3.5 | 5 | 11 | 9 | 31 |

The data in Table 1 are from "Wind and wave frequency distributions for sites around the British Isles", Offshore Technology Report 2001/030, Southampton Oceanography Centre.

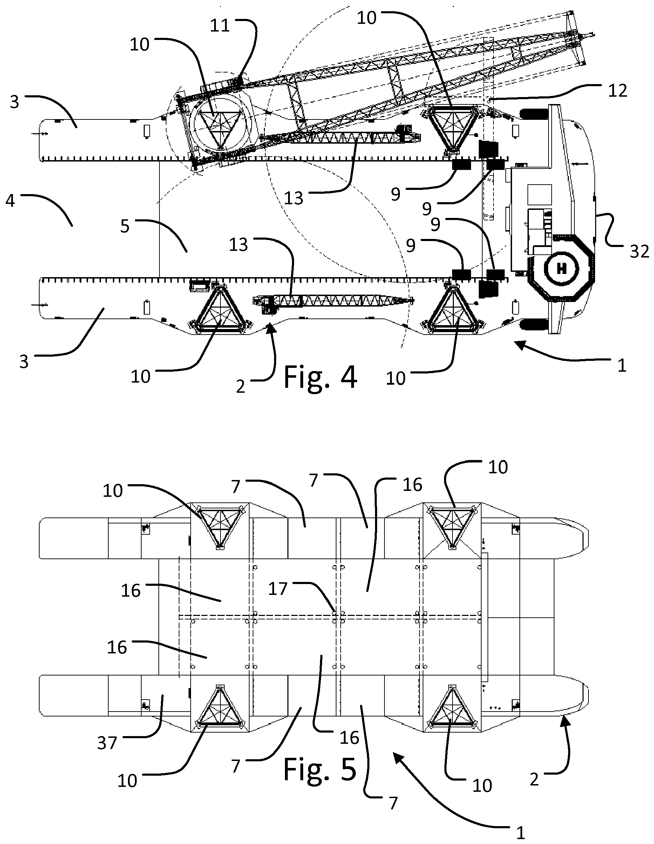

An embodiment of a self-propelled offshore installation vessel 1 is illustrated in general in Figs. 4-7 and 9. The embodiment has the following main particulars: Length over all 215 m, breadth 89 m, depth to upper deck 18 m, depth to main cargo deck 8.25 m, draught free sailing 6.25 m, and draught submerged 15 m, which is a predetermined draught in the context of the present invention. The installation vessel has a hull 2 with two cantilevered arms 3 extending on both sides of an unloading space 4 for lowering parts towards the sea bottom. The installation vessel has a plurality of main generators in a forward engine room, and the installation vessel is propelled by four azimuth propellers located in the aft end of the hull and further driven and positioned by four azimuth thruster propellers in the forward end of the hull, and by a transverse bow thruster.

A cargo main deck 5 has a side section 6 extending upwards at the starboard and port sides of the cargo main deck. The side sections 6 include ballast tanks 7 and several utility rooms. The side sections 6 have a substantially flat inner side facing the cargo main deck, and this side extends upwards into an upper wall-shaped portion 8, which on its top carries a rail structure. Wall-shaped portion 8 and the rail structure extend from the forward end of the cargo main deck to the aft end of cantilevered arms 3. Trolley winches 9 are mounted on the rail structure and they can move along the rail structure driven by a controllable drive. There are two trolley winches 9 on the port side and two trolley winches 9 on the starboard side. Remote operation of the trolley winches can be performed from the bridge in the forward superstructure or from a control station in a cabin located in the aft of the installation vessel.

The wind farm installation vessel is provided with four jack-up legs 10. Each leg extends vertically through the hull within a jack house, which is integrated in the hull. Two of the jack-up legs are located at a forward end of the cargo main deck, and two jack-up legs are located in side sections 6 at the aft end of the cargo main deck.

A main crane 10 is mounted on a crane structure extending around the aft jack-up leg on the port side. When the main crane is not in use, the boom rests in a supporting structure 12. Two auxiliary cranes 13 are installed on the side sections 6.

Otherwise, the vessel is equipped in traditional manner with mooring arrangements, life boats, a superstructure suitable for accommodating the needs of the crew and other personnel, fuel oil tanks, fresh water tanks, drain tanks, freshwater systems, heating systems, navigation systems, communications systems etc.

The self-propelled offshore installation vessel 1 performs many different operations during a complete installation process. One of the most critical operations in view of weather conditions is receiving a supply vessel, such as a barge at the offshore location. With previous installation vessels is was considered possible (however not proven in real operation) to receive a barge when the sea state was 2.0 metres significant wave height, and this was considered the limit of operations. When the sea state was higher than 2.0 metres significant wave height, operations had to be cancelled.

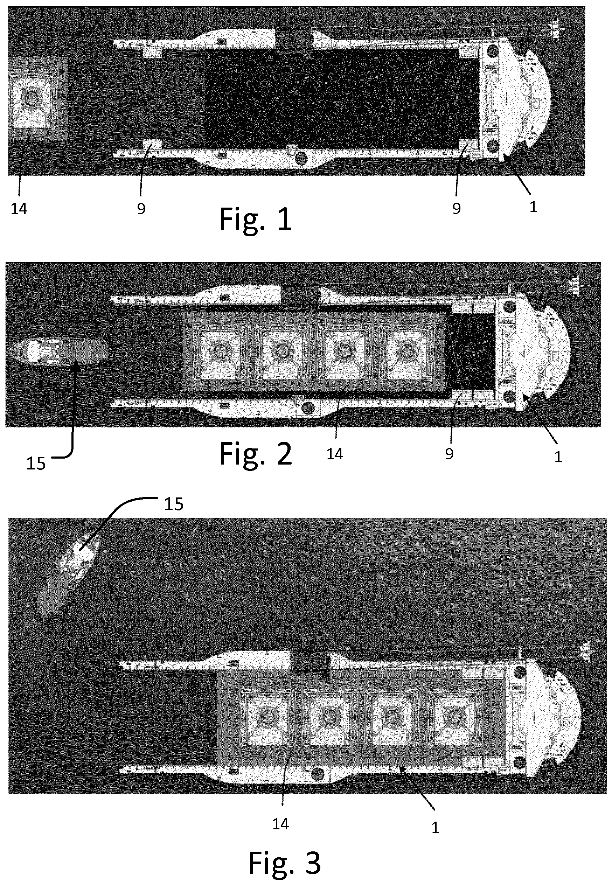

The process of receiving a barge may be outlined as follows. The ballasting system is activated and ballast taken in until the offshore installation vessel is at the predetermined draught with the cargo main deck submerged below sea level to a depth greater than the draught of a barge to be loaded. The jack-up legs may be activated and lowered onto the sea bottom and loaded with sufficient force to maintain installation vessel 1 in stable state with no movement from the waves. The installation vessel may be positioned with the bow facing the wind and waves so that the hull of the vessel provides a calmer area just aft of the vessel. A barge 14 loaded with parts to be installed has already been towed from port to the offshore site. While one end of the barge is connected to the tug boat 15, the other end of the barge is connected to wires from two trolley winches 9 positioned on the cantilevered arms 3, the connection preferably being in the crossing pattern illustrated in Fig. 1 where the wire from the starboard trolley winch is secured at the forward port corner of barge 14, and where the wire from the port side trolley winch is secured at the forward starboard corner of barge 14. This provides better control over the position of the barge end in relation to the cantilevered arms. The trolley winches are then activated to move in unison in the forward direction along the rail structure. When the trolley winches reach their forward-most position as illustrated in Fig. 3, then the barge has been received completely in a position above the cargo main deck. With the barge in the desired position, the aft end of the barge is moored to vessel 1 and the tug boat is released. The ballast system is activated to pump ballast water out of ballast tanks, until the cargo main deck is above sea level and the barge sits supported on the cargo main deck.

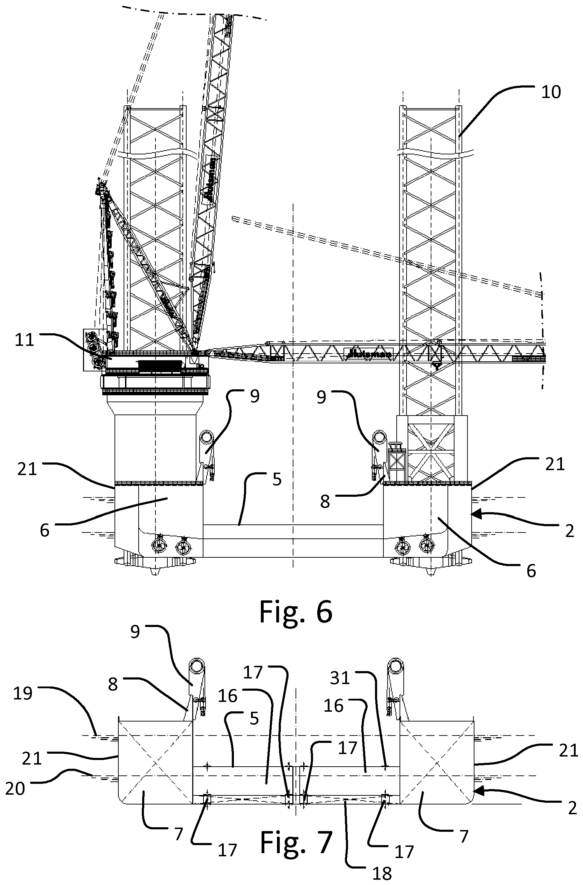

The hull structure below the cargo main deck 5 includes separate spaces 16 that could be used as tanks, however it is in the embodiment in question more convenient to let these spaces be open to the surroundings via pipes 17 extending through the lower bottom structure 18, see Fig. 7, and open holes 31 are arranged in the deck plating at the top of spaces 16 for ventilation of air. These separate spaces will thus fill with water when the installation vessel increases draught and will empty of water and fill with air when the hull has lower draught or is jacked up by the jack-up legs. The water line at the predetermined draught is denoted 19, and the water line at the draught for free sailing is denoted 20.

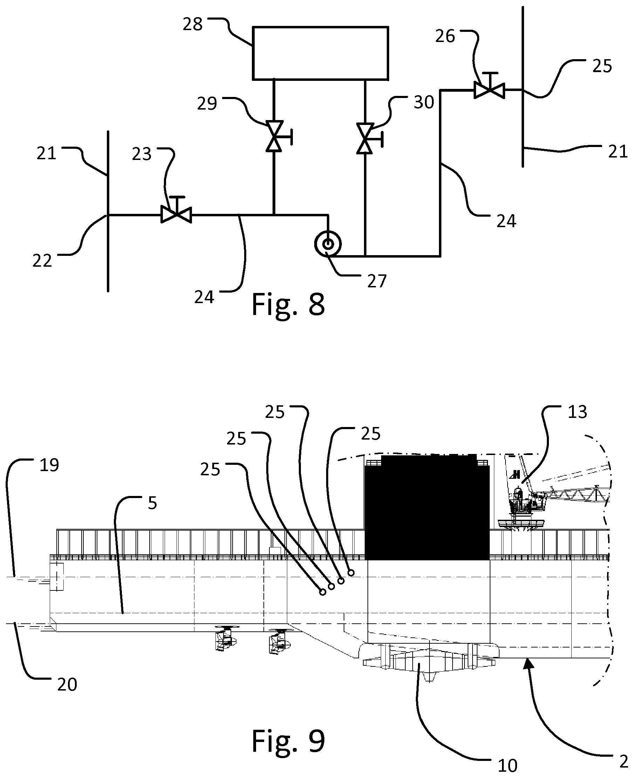

The hull 2 has an outer side 21 which is typically vertical and extends along the circumference of the hull. As illustrated in Fig. 8, the offshore installation vessel has a water system comprising a water inlet opening 22 in the hull associated with a controllable inlet valve 23, water conduit pipes 24, a water outlet opening 25 in the outer side 21 of the hull associated with a controllable outlet valve 26, and a water pump 27 being operable to pump water from the water inlet opening to a tank 28 or to pump water from the tank to the water outlet opening or to pump water from the water inlet opening to the water outlet opening, via the water conduit pipes. Control valves 29 and 30 can be activated between open and closed positions, and when control valve 29 is closed and control valve 30 is open, tank 28 can receive water from water pump 27. When control valve 29 is open and control valve 30 is closed, tank 28 can feed water to water pump 27. When both control valves are closed, water pump 27 can pump water from the water inlet opening directly to the water outlet opening.

The inlet valve 23 can be a butterfly valve or a spade valve or any other type of valve suitable as sea valve, and the inlet valve can be mounted at a sea chest in the hull. The water inlet opening 22 can be located at the outer side 21 in a position below water line 20, or in the bottom of the hull, or in the wall of separate space 16 in a position below water line 20, provided this separate space 16 is equipped with pipes 17 allowing free flow of water into separate space 16.

The water outlet opening 25 is located at the outer side of the hull in vicinity of the water line 19 corresponding to the predetermined draught at which the water system is to be operated to dampen waves. In an embodiment, there is a single water outlet opening located forward of a landing site on the hull of the installation vessel. A transfer vessel can approach the landing site and transfer personnel. The predetermined draught is in this case the relevant draught at which the personnel has to be transferred, e.g. the draught for free sailing. The self-propelled offshore installation vessel 1 may have water outlet openings located forward of a foundation installation position on the vessel, and water can be ejected to form an affected area of the sea at the area of the foundation installation. The predetermined draught is in this case the relevant draught for the installation of foundations.

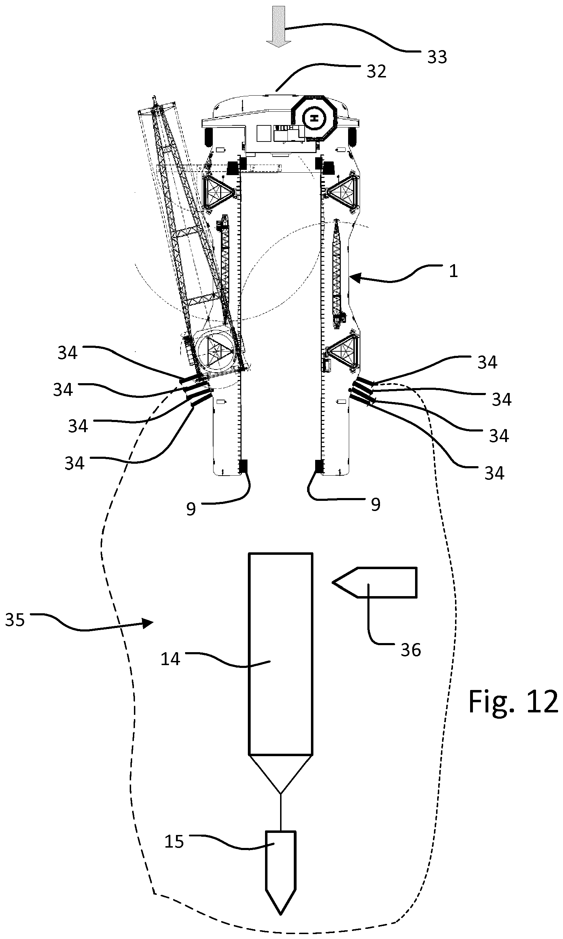

In the embodiment illustrated in Figs. 9 and 12, there are four water outlet openings 25 located on the starboard side of the hull, and four water outlet openings 25 located on the port side of the hull. The four water outlet openings are on both sides of the hull arranged in the area just aft of the aft jack-up leg 10. One of the water outlet openings is located above water line 19 and three water outlet openings are located below water line 19. Each of the water outlet openings is associated with an arrangement as illustrated in Fig. 8. Each water pump 27 is a centrifugal pump having a pumping capacity of 3000 m³/h. The eight water pumps are installed in a pump room 37 located in the starboard side of the hull. Naturally it is possible to use more than one pumping room and to locate water pumps in both the starboard side and in the port side of the hull. Water conduit pipes 24 are preferably made of glassfibre reinforced epoxy, or made of polyester or steel. Water outlet opening 25 is provided with a nozzle in form of a reinforcement ring in the outer side 21 of the hull. The reinforcement ring defines the outlet opening and has a smaller diameter than the water conduit pipe connected to the outlet opening. As an example, if the water conduit pipe has a diameter of 0.72 m, the reinforcement ring may have a diameter of 0.70 m, or 0.60 m.

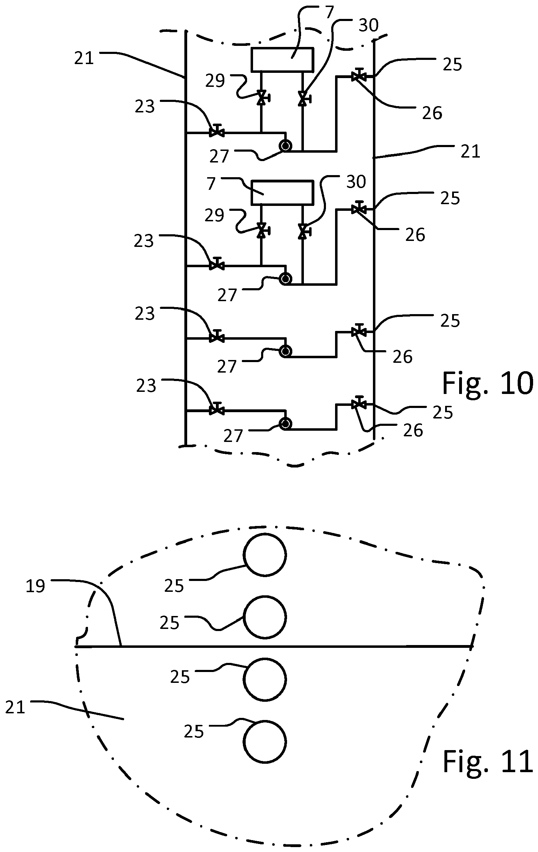

In another embodiment illustrated in Fig. 10, the water system comprises two water pumps 27 without a tank, and two water pumps 27 associated with a ballast tank 7. Other configurations are of course also possible. Ballast pumps may be utilized as water pumps in the water system, provided the ballast pumps have sufficient pumping capacity.

In the embodiment illustrated in Fig. 11 four water outlet openings 25 are arranged in the vertical in the outer side of the hull with two water outlet openings above the waterline at the predetermined draught, and two water outlet openings below the waterline. It is also possible to arrange all water outlet openings above or below the waterline.

Fig. 12 illustrates the self-propelled offshore installation vessel 1 in a position where the dynamic positioning system of the vessel maintains the bow 32 facing in direction of the incoming waves. Arrow 32 indicate the direction in which the waves propagate and the vessel is maintained in position with a bearing that is 180° off the direction of arrow 32. The water system is activated to eject water 34 out through four water outlet openings on the starboard side and out through four water outlet openings on the port side. The ejected water interacts with the waves to dampen waves in an affected area 35 of the sea. Affected area 35 is located at the aft end of hull 2 and extends aft of the hull at a considerable distance corresponding to at least one or two lengths of the installation vessel 1. The affected area 35 has a size allowing a barge 14 with parts to be fully within the affected area together with a tug boat 15 and a supply boat 36 that may assist in positioning the barge precisely with respect to the aft end of the installation vessel 1. Wires from trolley winches 9 are then connected to the barge, and the barge is received on the installation vessel, in the manner illustrated in Figs. 1 to 3.

In an embodiment, the self-propelled offshore installation vessel assists another offshore installation vessel, and the water system can then include hoses to be extended to and placed on the other vessel and used to eject water from the other vessel to produce an affected area of the sea at the other vessel while the other vessel performs offshore installation operations.

The vessel may have other dimensions, and modifications may be made within the scope of the patent claims. The water conduit pipe 24 can on the pressure side of the water pump be branched into several pipes of smaller diameter so that one pump can feed several water outlet openings 25. The water conduit pipe can on the inlet side of the water pump be branched into several pipes connected with several water inlet openings. One water inlet opening may feed several water pumps by branching the water conduit pipe connected to the inlet opening into several pipes connected with the water pumps.

The water system may include water pumps situated on the deck, such as on the cargo main deck. This can be convenient when the installation vessel is an existing vessel that is modified to include a water system as described in the above. The water pumps may include portable pumps, and the water conduit pipes can then include hoses, such as a first hose having a water inlet opening and extending to the water pump and a second hose extending from the water pump to a water outlet opening at the end of the second hose. As the water pump is located on the deck, the controllable inlet valve and the controllable outlet valve are not required.

Details in the above-mentioned embodiments and methods may be combined into further embodiments and methods within the scope of the patent claims.

## Claims

1. A self-propelled offshore installation vessel having a hull with an outer side and with a water system, which water system comprises at least one water inlet opening in the hull associated with a controllable inlet valve, water conduit pipes, at least one water outlet opening in the outer side of the hull associated with a controllable outlet valve, and at least one water pump being operable to pump water from the water inlet opening and/or to pump water to the water outlet opening via the water conduit pipes, **characterized in that** the at least one water outlet opening is provided with a nozzle device and is located at the outer side of the hull at a position of less than 5 meters from the water line at a predetermined draught of the self-propelled offshore installation vessel.

2. A self-propelled offshore installation vessel according to claim 1, **characterized in that** the predetermined draught is a draught at which the self-propelled offshore installation vessel is intended to receive a supply vessel, such as a barge with parts to be installed at an offshore installation site.

3. A self-propelled offshore installation vessel according to claim 1 or 2, **characterized in that** the at least one water outlet opening is a plurality of water outlet openings in the outer side of the hull.

4. A self-propelled offshore installation vessel according to claim 3, **characterized in that** at least some of the plurality of water outlet openings are arranged at different heights in the outer side of the hull, preferably arranged with at least one water outlet opening positioned below the water line corresponding to the predetermined draught of the self-propelled offshore installation vessel.

5. A self-propelled offshore installation vessel according to claim 4, **characterized in that** several water outlet openings are positioned below said water line.

6. A self-propelled offshore installation vessel according to any of claims 1 to 5, **characterized in that** the hull has a stern end and a cargo main deck and a side section extending upwards at either longitudinal side of the cargo main deck, that the self-propelled offshore installation vessel has ballast tanks and a ballast pumping system for changing the vessel draught between the predetermined draught, at which the cargo main deck is submerged below sea level, and a second draught, at which the cargo main deck is above sea level.

7. A self-propelled offshore installation vessel according to any of claims 1 to 6, **characterized in that** the at least one water pump is comprised by one or more ballast pumps of the self-propelled offshore installation vessel.

8. A self-propelled offshore installation vessel according to any of claims 1 to 7, **characterized in that** the at least one water pump has a total water pumping capacity of at least 9000 m³/h.

9. A self-propelled offshore installation vessel according to any of claims 1 to 8, **characterized in that** the at least one water pump is configured as from 2 to 12 water pumps, each having a water pumping capacity in the range of 1000 m³/h to 5000 m³/h.

10. A self-propelled offshore installation vessel according to any of claims 1 to 9, **characterized by** comprising two jack-up legs at a starboard side and two jack-up legs at a port side, one of said two jack-up legs being a forward jack-up leg and the other being an aft jack-up leg, and by the least one water outlet opening being a plurality of water outlet openings which are arranged either at the aft jack-up leg on the starboard side and on the port side, or aft of the aft jack-up leg on the starboard side and on the port side, such as at the starboard side and the port side of the stern of the hull.

11. A self-propelled offshore installation vessel according to any of claims 1 to 10, **characterized in that** the nozzle device has a cross-sectional area which is smaller than the cross-sectional area of the water conduit pipe connected to the water outlet opening.

12. A self-propelled offshore installation vessel according to any of claims 1 to 11, **characterized in that** the nozzle device directs the water in a direction different from the direction normal to the outer side of the hull.

13. A self-propelled offshore installation vessel according to any of claims 1 to 12, **characterized in that** the controllable outlet valve is a spade valve.

14. A method of operating a self-propelled offshore installation vessel at an offshore position having a sea state with waves, which self-propelled offshore installation vessel has a hull with an outer side and with a water system, which water system comprises at least one water inlet opening in the hull associated with a controllable inlet valve, water conduit pipes, at least one water outlet opening in the outer side of the hull associated with a controllable outlet valve, and at least one water pump being operable to pump water from the water inlet opening and/or to pump water to the water outlet opening via the water conduit pipes, **characterized in that** the water system is activated to eject water out through the at least one water outlet opening, which has a nozzle device, whereby the ejected water interacts with the waves to dampen waves in an affected area of the sea at the self-propelled offshore installation vessel.

15. A method of operating according to claim 14, **characterized in that** the offshore wind farm installation vessel is positioned with its bow facing in direction of the incoming waves, said affected area of the sea being located at least aft of the stern of the hull, and preferably the water system ejects water simultaneously out through water openings on both the starboard side and the port side of the hull.
